# EUROPÄISCHE PATENTANMELDUNG

(11) **EP 1 870 643 A2**
(43) Veröffentlichungstag der Anmeldung: **26.12.2007**
(21) Anmeldenummer: 07110273.5
(22) Anmeldetag: 14.06.2007
(51) Int. Cl.: F24D 19/10

(54) **Wärmepumpenanordnung**

(30) Priorität: 19.06.2006 DE 202006009538 U
(71) Anmelder: Schwörer Haus KG, 72531 Hohenstein (DE)
(72) Erfinder: Schwörer, Johannes, 72531 Hohenstein (DE)
(74) Vertreter: Schaumburg, Thoenes, Thurn, Landskron

(57) **Zusammenfassung**

Die Erfindung betrifft eine Vorrichtung zum Erzeugen von zumindest einem Teil der in einem Gebäude erforderlichen Heizleistung mit einer ersten Wärmepumpe und mindestens einer zweiten Wärmepumpe und mit einer Steuereinheit, die die Wärmepumpen so steuert, dass wahlweise die erste Wärmepumpe, die zweite Wärmepumpe oder die erste und die zweite Wärmepumpe Wärme erzeugen.

## Beschreibung

Die Erfindung betrifft eine Wärmepumpenanordnung insbesondere zum Erzeugen von mindestens einem Teil der in einem Gebäude erforderlichen Heizleistung. Weiterhin betrifft die Erfindung eine Vorrichtung zum Erwärmen und/oder Austauschen von Luft in Räumen mit Hilfe einer Wärmepumpe.

Zum Heizen und/oder Kühlen von Gebäuden sowie zum Erzeugen von Warmwasser in Gebäuden werden vorzugsweise Kompressionswärmepumpen eingesetzt, die einen Kompressor aufweisen. Durch einen thermodynamischen Kreisprozess entzieht die Wärmepumpe einem wärmeabgebenden Körper, wie z. B. Wasser, Erdreich oder Luft, mit Hilfe eines im Kreisprozess verwendeten Arbeitsmittels (Gas oder Flüssigkeit) Wärme und führt diese einem wärmeaufnehmenden Körper zu Heizzwecken zu. Dieses Verfahren entspricht dem thermodynamischen Kreisprozess einer Kältemaschine, nur dass bei der Wärmepumpe die erzeugte Wärme und nicht die erzeugte Kälte genutzt wird. Als Antrieb dient vorzugsweise ein Elektromotor. Solche Wärmepumpen können auf einfache Art und Weise mit Systemen zur Wärmerückgewinnung aus der aus einem Gebäude abzuführenden Abluft gekoppelt sein. Eine Einrichtung zum Erwärmen und Austauschen von Raumluft, durch die der aus einem Raum bzw. Gebäude abzuführenden Abluft die dem Gebäude zuzuführende Zuluft mit Hilfe eines Wärmetauschers vorgewärmt wird, ist aus dem Dokument DE 298 16 724 U1 bekannt. Die in diesem Dokument offenbarten Merkmale der Einrichtung zum Erwärmen und Austauschen von Raumluft sind einzeln oder in dort offenbarter Kombination mit der nachfolgend beschriebenen Erfindung kombinierbar und werden hiermit durch Bezugnahme in die vorliegende Beschreibung aufgenommen.

Alternativ zur Kompressionswärmepumpen können auch Sorptionswärmepumpen, insbesondere Absorptions- und Adsorptions-Wärmepumpen, zum Erzeugen von der in einem Gebäude benötigten Wärme verwendet werden. Diese Sorptionswärmepumpen werden durch eine weitere Wärmequelle, insbesondere durch Befeuerung, angetrieben.

Wärmepumpenanordnungen werden zunehmend zum Beheizen von Wohnräumen von Gebäuden, insbesondere in Ein- oder Mehrfamilienhäusern sowie in Behelfsunterkünften, beispielsweise Wohncontainern, zum Erzeugen der zum Beheizen dieser Räume und Gebäude erforderlichen Heizleistung und Wärmemenge. Zum Einbringen der Wärme in die Räume der Gebäude eignet sich besonders ein Lüftungssystem, dass die verbrauchte Luft in den Räumen gegen von Außen in das Gebäude zugeführte Frischluft austauscht. Die angesaugte Frischluft wird dann mit Hilfe der von der Wärmepumpe erzeugten Wärme erwärmt und über ein Zuluftleitungssystem in die einzelnen Räume verteilt. Durch die in die Räume einströmende Zuluft wird die in den Räumen befindliche verbrauchte Abluft verdrängt, die vorzugsweise über ein Abluftleitungssystem aus dem Raum entweichen kann. Die über das Abluftleitungssystem geförderte Abluft und die von außen zugeführte Frischluft werden vorzugsweise über ein Wärmetauscher geführt, durch den der Abluft Wärme entzogen und der Frischluft Wärme zugeführt wird.

Bei Gebäuden schwankt die erforderliche Heizleistung jahreszeitlich bedingt sehr stark. Im Sommer ist oft nur eine Heizleistung zum Bereitstellen von Warmwasser erforderlich wohingegen im Winter eine große Heizleistung zum Beheizen der Räume des Gebäudes erforderlich ist. Die Wärmepumpe muss somit dazu geeignet sein, die größtmögliche erforderliche Wärmeleistung zu erbringen. Das Erzeugen relativ geringer Heizleistung gegenüber der Heizleistung, für die die Wärmepumpe ausgelegt ist, ist dann oft nur mit einem geringeren Wirkungsgrad möglich als das Erzeugen der ausgelegten Maximalheizleistung. Ferner ist zum Bereitstellen großer Wärmemengen bzw. zum Bereitstellen einer hohen Heizleistung auch eine hohe Temperatur erforderlich. Das Erzeugen hoher Temperaturen bei hoher Heizleistung ist mit bekannten Wärmepumpen jedoch nur mit relativ großem Aufwand und bei relativ geringem Wirkungsgrad möglich.

Es ist Aufgabe der Erfindung, eine Vorrichtung zum Erzeugen von zumindest einem Teil der in einem Gebäude erforderlichen Heizleistung mit Hilfe einer Wärmepumpenanordnung anzugeben, durch die auf einfache Art und Weise die erforderliche Heizleistung kostengünstig bereitgestellt wird.

Diese Aufgabe wird durch eine Vorrichtung mit den Merkmalen des Anspruchs 1 und durch eine Vorrichtung mit den Merkmalen des Anspruchs 11 gelöst. Vorteilhafte Weiterbildungen der Erfindung sind in den abhängigen Ansprüchen angegeben.

Durch eine Vorrichtung mit den Merkmalen des Anspruchs 1 kann abhängig von der erforderlichen Heizleistung eine der Wärmepumpen oder beide Wärmepumpen zum Bereitstellen der erforderlichen Heizleistung aktiviert bzw. betrieben werden. Dadurch kann ein besserer Wirkungsgrad erzielt und insbesondere bei einer kaskadierten Erwärmung eines zu erwärmenden Mediums auf einfache Art und Weise auf eine höhere Temperatur erwärmt werden. Ein solches Medium kann z. B. Luft zum Beheizen von Räumen oder Wasser zum Beheizen der Räume über mindestens einen Heizkreislauf sowie zum Erwärmen von Warmwasser für eine Warmwasserversorgung des Gebäudes sein. Das zu erwärmende Medium wird vorzugsweise über einen Wärmetauscher erwärmt.

Vorzugsweise ist ein weiterer Wärmetauscher vorgesehen, der mit Hilfe der aus dem Gebäude abzuführenden Abluft die dem Gebäude zuzuführende Zuluft erwärmt, wobei ein erster Kondensator oder ein erster Desorber der ersten Wärmepumpe und/oder mindestens ein zweiter Kondensator oder zweiter Desorber der zweiten Wärmepumpe die mit Hilfe des zweiten Wärmetauschers erwärmte Zuluft weiter erwärmt bzw. erwärmen. Dies ist besonders vorteilhaft, wenn zum Be- und Endlüften des Gebäudes ein Lüftungssystem vorgesehen ist. Durch das Vorsehen des zweiten Wärmetauschers kann die durch die Wärmepumpe zur Erzeugung der Heizleistung zum Beheizen des Gebäudes reduziert werden, da mit Hilfe der Abluft die Zuluft erwärmt wird, bevor die vorgewärmte Zuluft dann mit Hilfe der Wärmepumpe bzw. den Wärmepumpen weiter erwärmt wird. Als Wärmetauscher eignen sich Strömungswärmetauscher, insbesondere ein Kreuzstrom-Plattenwärmetauscher oder ein Gegenstrom-Wärmetauscher.

Bei anderen Ausführungsformen der Erfindung ist es auch möglich, anstatt einer Kompressionswärmepumpe eine Adsorptions- oder Absorptionswärmepumpe einzusetzen. Somit können bei der Erfindung sowohl mindestens zwei Kompressionswärmepumpen, mindestens eine Kompressionswärmepumpe und eine Sorptionswärmepumpe oder mindestens zwei Sorptionswärmepumpen miteinander kombiniert werden. Die Sorptionswärmepumpen werden insbesondere durch eine Befeuerung angetrieben, wobei die Befeuerung vorzugsweise mit einem Gasbrenner erfolgt. Die Kompressionswärmepumpen sind in relativ kleinen Bauformen verfügbar. Mit Hilfe von Sorptionswärmepumpen kann preisgünstig Wärmeenergie erzeugt werden.

Als Wärmequelle für die erste und/oder zweite Wärmepumpe kann das Erdreich, das Grundwasser, die Umgebungsluft und/oder Oberflächenwasser genutzt werden. Dieser Wärmequelle wird zum Erzeugen der Heizleistung Wärme entzogen, vorzugsweise mit Hilfe eines weiteren Wärmetauschers.

Die erste und zweite Wärmepumpe sind vorzugsweise in einem nach außen abgeschlossenen wärmegedämmten Gehäuse angeordnet, das vorzugsweise Luftdicht ist. In diesem Gehäuse kann auch der erste und/oder zweite Wärmetauscher angeordnet sein. Vorteilhaft ist es auch, den Verdampfer der ersten Wärmepumpe in einem Abluftwärmestrom des Gebäudes, insbesondere nach dem ersten Wärmetauscher, vorzugsweise in dem Gehäuse anzuordnen. Ein erster Kondensator der ersten Wärmepumpe und mindestens ein zweiter Kondensator der mindestens zweiten Wärmepumpe sind in einem Zuluftkanal zum Erwärmen der dem Gebäude zuzuführenden Zuluft angeordnet. Ferner kann mindestens die erste Wärmepumpe im Zuluftkanal vorzugsweise vor dem ersten und/oder zweiten Kondensator angeordnet sein. Der Verdampfer der zweiten Wärmepumpe ist vorzugsweise außerhalb des Gehäuses, insbesondere außerhalb des Gebäudes, angeordnet.

Zusätzlich zur Wärmedämmung kann das Gehäuse auch schallgedämmt sein. Durch ein solches Gehäuse ist eine kompakte Bauform der beanspruchten Vorrichtung möglich. Insbesondere können alle im Gehäuse anzuordnenden Komponenten beim Hersteller der Wärmepumpenanordnung betriebsbereit montiert miteinander verbunden werden und bilden eine Baueinheit, die einstückig in das zu beheizende Gebäude eingebracht werden kann. Die erforderlichen Verbindungen können dann mit den entsprechenden Gebäudekomponenten insbesondere mit einer Zuluftleitung zum Zuführen von erwärmter Luft in die Räume des Gebäudes, einem Abluftanschluss zum Zuführen der Abluft des Gebäudes zur Vorrichtung, einer Fortluftleitung zum Abführen von Fortluft aus dem Gebäude und einem Frischluftanschluss zum Zuführen von Frischluft von außerhalb des Gebäudes in das Gehäuse. Die beiden Wärmepumpen können zum Erzeugen derselben maximalen Heizleistung ausgelegt sein oder zum Erzeugen unterschiedlicher maximaler Heizleistungen.

Ein zweiter Aspekt der Erfindung betrifft eine Vorrichtung zum Erwärmen und/oder Austauschen von Luft in Räumen eines Gebäudes. Die Vorrichtung umfasst ein durch mindestens einen Frischluftanschluss mit der Umgebung des Gebäudes in Verbindung stehenden Gehäuse, in das durch den Frischluftanschluss Frischluft aus der Umgebung ansaugbar ist, die durch mindestens einen am Gehäuse vorgesehenen Zuluftanschluss, der mit den zu erwärmenden Räumen und/oder Wärmetauschern zum Erwärmen eines zu erwärmenden Mediums in Verbindung steht, in die Räume des Gebäudes bzw. zum Wärmetauscher gelangen kann.

Die Vorrichtung weist eine erste Wärmepumpe und mindestens eine zweite Wärmepumpe auf, wobei im Gehäuse mindestens ein Kompressor der ersten Wärmepumpe und ein Kompressor der zweiten Wärmepumpe angeordnet sind. Zumindest ein Verdampfer der ersten Wärmepumpe kann in einem Abluftwärmestrom des Gebäudes angeordnet sein. Dadurch wird der Abluftwärmestrom als Wärmequelle genutzt, der mit Hilfe der Wärmepumpe Wärme entzogen wird. Ferner ist es vorteilhaft, wenn mindestens der Kondensator der ersten Wärmepumpe im Gehäuse angeordnet ist. Vorzugsweise sind der Kondensator der ersten Wärmepumpe und der Kondensator der zweiten Wärmepumpe im Gehäuse angeordnet. Der Verdampfer der zweiten Wärmepumpe ist vorzugsweise außerhalb des Gehäuses angeordnet. Besonders vorteilhaft ist es, den Verdampfer der zweiten Wärmepumpe außerhalb des Gebäudes anzuordnen und dass der Verdampfer mit der Umgebungsluft, mit dem Grundwasser, dem Oberflächenwasser oder dem Erdreich im Wärmeaustausch steht.

Das Gehäuse der Vorrichtung ist vorzugsweise innerhalb des Gebäudes angeordnet, wodurch kurze Zuluftwege zu den beheizenden Räumen ermöglicht werden und wenig erzeugte Wärme ungenutzt verloren geht.

Ferner kann mindestens ein Lüfter vorgesehen sein, durch den die Abluft aus dem Gebäude, die Zuluft in das Gebäude, die Außenluft in das Gebäude oder die Fortluft aus dem Gebäude gefördert wird.

Nachfolgend wird die Erfindung anhand der Figur näher erläutert. Der Schutzumfang der Erfindung ist jedoch nicht auf dieses Ausführungsbeispiel oder die zum Beschreiben des Ausführungsbeispiels verwendeten Begriffe beschränkt.

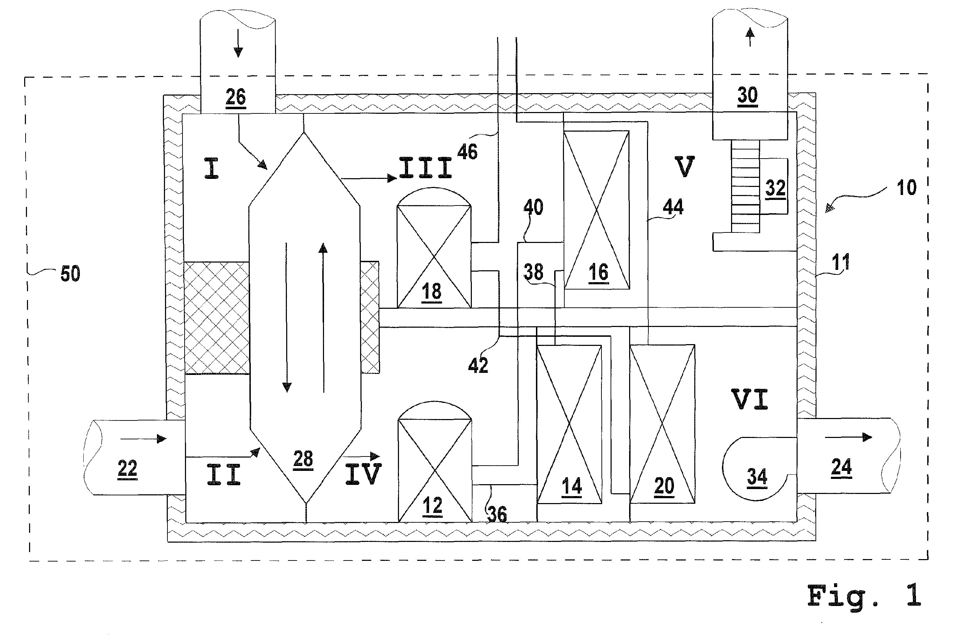

Die einzige als Figur 1 bezeichnete Figur zeigt schematisch den erfindungsgemäßen Aufbau einer Wärmepumpenanordnung 10 zum Beheizen von Räumen eines nur schematisch durch eine Strichlinie dargestellten Gebäudes 50. Wesentliche Komponenten der Wärmepumpenanordnung 10 sind in einem Gehäuse 11 angeordnet. In dem Gehäuse 11 ist ein Kompressor 12, ein Kondensator 14 und ein Verdampfer 16 einer ersten Wärmepumpe sowie ein Kompressor 18 und ein Kondensator 20 einer zweiten Wärmepumpe angeordnet. Der Kompressor 12, der Kondensator 14 und der Verdampfer 16 sind über Verbindungsleitungen 36, 38, 40 zu einem Kreislaufprozess verbunden. Der Kompressor 18, der Kondensator 20 sowie ein nicht dargestellter Verdampfer der zweiten Wärmepumpe sind über die Verbindungsleitungen 42, 44, 46 zu einem Kreislaufprozess verbunden, wobei der Verdampfer der zweiten Wärmepumpe außerhalb des Gehäuses 11, vorzugsweise außerhalb des Gebäudes 50, angeordnet ist. Der Verdampfer der zweiten Wärmepumpenanordnung ist über die durch das Gehäuse 11 nach außen geführten Verbindungsleitungen 44, 46 mit den im Gehäuse 11 angeordneten Komponenten der Wärmepumpenanordnung 10 verbunden.

Der Wärmepumpenanordnung 10 wird über einen Abluftanschluss 22 Abluft in einen abgeschotteten Bereich II des Gehäuses 11 zugeführt und durchströmt einen Wärmetauscher 28. Über einen Frischluftanschluss 26 der Wärmepumpenanordnung 10 wird Frischluft von außerhalb des Gebäudes 50 einem abgeschotteten Bereich I des Gehäuses 11 zugeführt und durchströmt ebenfalls den Wärmetauscher 28, wobei die Frischluft von der Abluft getrennt durch den Wärmetauscher 28 aneinander vorbeigeführt wird. Die Abluft gibt beim Durchströmen des Wärmetauschers 28 Wärme an die zugeführte Frischluft ab und gelangt nach dem Durchströmen des Wärmetauschers 28 in den Bereich III des Gehäuses 11. Die erwärmte Frischluft gelangt beim Verlassen des Wärmetauschers 28 in den Bereich IV des Gehäuses 11. Die vorgewärmte Frischluft strömt am Kompressor 12 der ersten Wärmepumpe vorbei in zum Verdampfer 14 der ersten Wärmepumpe. Beim Durchströmen des Verdampfers 14 wird die zugeführte Luft weiter erwärmt und anschließend dem Verdampfer 20 der zweiten Wärmepumpe zum weiteren Erwärmen zugeführt. Nach dem Verdampfer 20 befindet sich die erwärmte Luft im Bereich VI und wird mit Hilfe eines Gebläses 34 in einen mit einem Zuluftsystem des Gebäudes 50 verbundenen Zuluftanschluss 24 gefördert.

Die Kondensatoren 14 und 20 weisen vorzugsweise einen mäanderförmig gebogenes Rohr auf, dass mit Elementen zum vergrößern der wirksamen Oberfläche verbunden ist. Vorzugsweise sind die Elemente durch Blechplatten nach Art eines Kühlkörpers ausgebildet, die in Ebenen orthogonal zur Längsachse des gebogenen Rohrs angeordnet sind. Nach dem Durchströmen des Wärmetauschers 28 befindet sich die Abluft im Bereich III und strömt am Kompressor 18 der zweiten Wärmepumpe vorbei. Die Abluft kühlt somit den Kompressor 18 der zweiten Wärmepumpe und nimmt Abwärme des Kompressors 18 auf. In gleicher Weise kühlt die vorgewärmte Frischluft den Kompressor 12 der ersten Wärmepumpe beim Vorbeiströmen. Anschließend durchströmt die Abluft aus dem Bereich III den Verdampfer 16 der ersten Wärmepumpe und gibt dabei Wärme an den Verdampfer 16 und somit an den Kreislaufprozess der ersten Wärmepumpe ab. Der Verdampfer 16 hat denselben, einen gleichen oder einen ähnlichen Aufbau wie die Kondensatoren 14 und 20. Nachdem die Abluft den Verdampfer 16 durchströmt hat, gelangt sie in den Bereich V und wird mit Hilfe eines Lüfters 32 über eine mit einem Fortluftanschluss 30 verbundene Fortluftleitung aus dem Gebäude 50 gefördert. Der Lüfter 32 ist in diesem Ausführungsbeispiel als Radiallüfter ausgeführt. Ein solcher Radiallüfter kann eine recht hohe Förderleistung und einen relativ hohen Förderdruck bei geringer Geräuschentwicklung erzeugen. Der Lüfter 32 erzeugt im Bereich V einen Unterdruck, durch den die Abluft aus einem Abluftsystem des Gebäudes 50 durch den Wärmetauscher 28 in den Bereich III weiter durch den Verdampfer 16 in den Bereich V gesaugt wird. Zusätzlich oder alternativ kann im Abluftsystem ein weiterer Lüfter vorgesehen sein, durch den die Abluft zum Abluftanschluss 22 mit einem Förderdruck in dem Bereich II gefördert wird. Durch diesen Förderdruck wird die Abluft durch den Wärmetauscher 28 in den Bereich III und weiter durch den Verdampfer 16 in den Bereich V und gegebenenfalls weiter über den Fortluftanschluss 30 in einen Fortluftkanal gefördert.

Anstatt der Wärmepumpenanordnung 10 enthaltenen ersten Kompressionswärmepumpe und zweiten Kompressionswärmepumpe kann zumindest eine der Wärmepumpen als Sorptions, insbesondere als Adsorptions- oder Absorptionswärmepumpe, ausgeführt sein, wobei dann der Kondensator der jeweiligen Wärmepumpe durch einen Desorber und der Verdampfer der jeweiligen Wärmepumpe durch einen Adsorber ersetzt wird. Ein Kompressor ist dann nicht mehr erforderlich. Dabei wird zum Zuführen der erforderlichen Energie vorzugsweise ein weiterer Wärmetauscher vorgesehen, die zum Austreiben des Kreislaufsmittels erforderlich ist.

Die Wärmepumpenanordnung 10 kann zum Erzeugen von Heizleistung nur mit der ersten Wärmepumpe, nur mit der zweiten Wärmepumpe sowie mit der ersten und der zweiten Wärmepumpe betrieben werden. Mindestens eine der Wärmepumpen kann zum Erzeugen einer gewünschten Wärmeleistung mit Hilfe einer Pulsweitensteuerung oder einer Drehzahlsteuerung über eine Steuereinheit angesteuert werden, wobei die Steuereinheit vorzugsweise eine Raum- und/oder Außentemperatur geführte Regelung insbesondere mit Hilfe eines Mikrokontrollerreglers ausführt.

Die gezeigte Wärmepumpenanordnung 10 eignet sich besonders als kompakte Wärmepumpenanordnung zur Verwendung in einem Einfamilienhaus, in einem Zweifamilienhaus oder in einem Mehrfamilienhaus. Bei anderen Ausführungsbeispielen kann die Steuereinheit zum Ansteuern der Wärmepumpen mit im Gehäuse 11 integriert sein oder anderweitig mit dem Gehäuse 11 verbunden sein. Bei der vorliegenden Wärmepumpenanordnung müssen die Luftzuführungen 22, 24, 26, 30 nur mit den entsprechenden Gebäudeanschlüssen und die Leitungen 44, 46 mit dem Luftwärmetauscher des zweiten Verdampfers der zweiten Wärmepumpe verbunden werden, der außerhalb des Gebäudes angeordnet ist. Die Kompressoren 12, 18 haben Elektromotoren, die mit elektrischer Energie versorgt werden. Vorzugsweise ist die Drehzahl des Elektromotors des Kompressors 12 mit Hilfe der Steuereinheit, vorzugsweise über einen Frequenzumrichter, einstellbar. Alternativ oder zusätzlich kann auch die Drehzahl des Elektromotors des Kompressors 18 einstellbar sein.

Die Bereiche I bis VI sind vorzugsweise voneinander abgeschottet, vorzugsweise luftdicht zueinander isoliert, und nur über den Wärmetauscher 28, die Kondensatoren 14, 20 und den Verdampfer 16 miteinander verbunden, sodass alle durch die Bereiche I bis VI strömende Luft durch den Wärmetauscher 28, den Verdampfer 16 und die Kondensatoren 14, 20 strömen muss.

Die Bereiche III und V sind von den Bereichen IV und VI durch einen Zwischenboden des Gehäuses 11 zueinander abgeschottet, vorzugsweise luftdicht abgetrennt. Es sind drei Betriebsarten der Wärmepumpenanordnung 10 vorgesehen:
Die durch die Wärmepumpen erzeugte Heizleistung wird nur an die Zuluft abgegeben. Mit Hilfe der Wärmepumpen wird eine Warmluftheizung betrieben.

Es sind Mittel zum Umschalten der Erwärmung der Zuluft auf den Betrieb einer Warmwassererzeugung vorgesehen, mit der Trinkwasser und/oder Brauchwasser zum Bereitstellen von Warmwasser erwärmt wird. Es wird somit eine kombinierte Warmluftheizung und Warmwasseraufbereitung bereitgestellt. In dieser Betriebsart kann eine Pumpe zur Erwärmung des Wassers und die zweite Wärmepumpe zum Erzeugen der Heizleistung zur Warmluftheizung vorgesehen werden. Vorzugsweise hat die erste Wärmepumpe einen weiteren dritten Kondensator und die zweite Wärmepumpe einen weiteren vierten Kondensator, die alternativ zu dem ersten Kondensator der ersten Wärmepumpe und dem zweiten Kondensator der zweiten Wärmepumpe in den Kreislaufprozess der jeweiligen Wärmepumpe eingebunden werden, sodass die erzeugte Wärme über den dritten und den vierten Wärmetauscher an das zu erwärmende Trinkwasser abgegeben wird.

Der Wärmepumpenkreislauf wird in umgekehrter Richtung betrieben, sodass der erste Kondensator 14 als Verdampfer und der erste Verdampfer 16 als Kondensator der ersten Wärmepumpe dient und sodass der zweite Kondensator 20 als Verdampfer und der zweite Verdampfer als Kondensator der zweiten Wärmepumpe dient. Dadurch kann die Zuluft abgekühlt und den Räumen Wärme entzogen werden. Damit wird eine sogenannte Sommer-Kühlschaltung der Heizungswärmepumpenanordnung 10 realisiert.

Bei jeder der Betriebsarten können der erste Kondensator und der dritte Kondensator in Reihe angeordnet werden, sodass sowohl Wärme an das zu erwärmende Trinkwasser als auch an die zu erwärmende Zuluft abgegeben wird. In gleicher Weise können bei jeder der Betriebsarten der zweite Kondensator und der vierte Kondensator in Reihe angeordnet sein, wobei das im Kreislaufprozess verwendete Kreislaufmittel jeweils zuerst dem dritten bzw. dem vierten Kondensator zugeführt wird und anschließend dem ersten Kondensator bzw. dem ersten Kondensator bzw. zweiten Kondensator. Dadurch wird erreicht, dass das Trinkwasser auf relativ hohe Temperaturen im Bereich zwischen 50°C und 60°C erwärmt werden kann. Dies ist insbesondere erforderlich, um hygienische und somit gesundheitliche Anforderungen bei der Trinkwassererwärmung zu erfüllen. Das Umschalten zwischen der Einbindung des ersten Kondensators 14 und des zweiten Kondensators 20 oder des dritten Kondensators und des vierten Kondensators sowie das in Reihe Schalten des ersten und dritten Kondensators sowie des zweiten und vierten Kondensators erfolgt vorzugsweise mit Hilfe geeigneter Ventilanordnungen, deren Antriebe vorzugsweise durch Steuersignale der Steuereinheit betätigbar sind.

Die zweite Wärmepumpe wird insbesondere nur bei relativ kalten Außentemperaturen parallel zur ersten Wärmepumpe betrieben, da dann größere Heizleistungen erforderlich sind. Ferner kann die zweite Wärmepumpe zusätzlich oder alternativ zur ersten Wärmepumpe zur Warmwasserbereitung eingesetzt werden. Im vorliegenden Ausführungsbeispiel wird die zweite Wärmepumpe mit einem Verdampfer betrieben, der außerhalb des Gebäudes 50 im Freien aufgestellt ist und die Umgebungsluft als Ladeenergie und somit als Wärmequelle nutzt. Die erste Wärmepumpe entzieht der Abluft nach dem Wärmetauscher 28 die erforderliche Wärmeenergie, sodass die erfindungsgemäße Wärmeanordnung 10 gemäß dem vorliegenden Ausführungsbeispiel primär Wärme aus der Abluft und sekundär aus der Außenluft entnimmt. Es besteht auch die Möglichkeit, die Wärmepumpenanordnung 10 ohne den Wärmetauscher 28 zu bauen und zu betreiben.

Mit Hilfe des Lüfters 34, dessen Antriebsdrehzahl vorzugsweise geändert werden kann, und/oder zusätzlichen Stellelementen kann der Zuluftstrom eingestellt werden. Vorzugsweise sind weitere Stellelemente, insbesondere Drosselklappen, Lüfter und Blenden, vorgesehen, um die Abluftmenge, die von außen zugeführte Frischluftmenge und die nach außen geführte Fortluftmenge einzustellen, sodass sich der zum Beheizen des Gebäudes 50 erforderliche Zuluftstrom einstellt, der sowohl die zum Beheizen erforderliche Luftmenge als auch die erforderliche Temperatur hat. Das Einstellen der Luftmenge und/oder Temperatur erfolgt insbesondere mit Hilfe einer Temperaturregelung, die insbesondere die Außentemperatur und zumindest eine Raumtemperatur des Gebäudes 50 berücksichtigt. Eine solche Regelung erfolgt vorzugsweise mikrokontrollergesteuert.

Mit Hilfe der Wärmepumpenanordnung 10 ist eine höhere Heizleistung möglich als bei bekannten Wärmepumpenanordnungen. Die Heizleistung einer der eingesetzten Wärmepumpen muss nicht auf den maximalen Wärmebedarf des Gebäudes 50 ausgelegt sein, da diese Heizleistung durch den Parallelbetrieb beider Wärmepumpen bereitgestellt werden kann. Dadurch lässt sich ein nur geringer Heizleistungsbedarf von nur einer der beiden Wärmepumpen decken, sodass diese geringere Heizleistung mit einer höheren Effizienz als beim Betrieb einer auf den maximalen Wärmebedarf des Gebäudes 50 ausgelegten einzelnen Wärmepumpe. Die Heizleistung kann somit schon durch Auswahl der Wärmepumpen effizient und mit einem hohen Wirkungsgrad bereitgestellt werden. Die beiden Wärmepumpen werden durch das wahlweise Betreiben der ersten Wärmepumpe, der zweiten Wärmepumpe oder der ersten Wärmepumpe und der zweiten Wärmepumpe gestuft betrieben, sodass die erzeugte Heizleistung durch die Auswahl der zum Erzeugen der Heizleistung genutzten Wärmepumpen dem Wärmebedarf des Gebäudes 50 bzw. des gesamten Objekts einfach und effizient angepasst werden kann.

Durch das Anordnen des ersten Kondensators 14 und des zweiten Kondensators 20 hintereinander können auch höhere Zulufttemperaturen erreicht werden, da die zugeführte Luft mit Hilfe des ersten Kondensators 14 auf eine erste Temperatur und anschließend mit Hilfe des zweiten Kondensators 20 auf eine zweite höhere Temperatur erwärmt wird.

Mit Hilfe der erwähnten Steuereinheit ist es möglich, die Vereisung des ersten Verdampfers 16 und des zweiten Verdampfers zu reduzieren, wodurch eine Abtaufunktion nur noch selten erforderlich ist oder wodurch auf eine Abtaufunktion verzichtet werden kann. Dadurch kann ein höherer Wirkungsgrad und somit eine höhere Energieeffizienz erreicht werden.

Die Wärmepumpenanordnung 10 im Gehäuse 11 ermöglicht eine sehr kompakte Bauform der Wärmepumpenanordnung 10, sodass ein sehr geringer Platzbedarf für die Wärmepumpenanordnung 10 erforderlich ist und eine einfache und kostensparende Installation im Gebäude 50 möglich ist. Es müssen nur noch wenig Verbindungsleitungen geschlossen werden. Die Leitungsführung innerhalb des Gehäuses 11 und die Anordnung der im Gehäuse 11 vorgesehenen Komponenten kann schon im Werk bei der Herstellung der Wärmepumpenanordnung 10 optimiert werden. Durch das Anordnen zumindest der Kompressoren 12, 18 und der Kondensatoren 14, 20 der Wärmepumpe im Gehäuse 11 können Wärmeverluste an die Umgebung reduziert und der Wirkungsgrad der Wärmepumpe weiter erhöht werden. Durch die vorgesehene Wärmedämmung des Gehäuses 11 ist auch die Aufstellung der Wärmepumpenanordnung 10 in unbeheizten Räumen oder im Freien möglich.

Vorzugsweise ist die bereits erwähnte Steuereinheit in das Gehäuse 11 integriert oder mit dem Gehäuse 11 verbunden. Diese Steuereinheit regelt und/oder steuert die Lüftung einschließlich der Zufuhr von Frischluft über den Wärmetauscher 28 zu den beiden Wärmepumpen und stimmt diese aufeinander ab.

## Patentansprüche

1. Vorrichtung zum Erzeugen von zumindest einem Teil der in einem Gebäude erforderlichen Heizleistung,
mit einer ersten Wärmepumpe und mindestens einer zweiten Wärmepumpe,
mit einer Steuereinheit, die die Wärmepumpen so steuert, dass wahlweise die erste Wärmepumpe, die zweite Wärmepumpe oder die erste und die zweite Wärmepumpe Wärme erzeugen.

2. Vorrichtung nach Anspruch 1, **dadurch gekennzeichnet, dass** die Steuereinheit die Wärmepumpen abhängig von einer zu erzeugenden Wärmemenge, einer zu erzeugenden Heizleistung und/oder einer zu erzeugenden Temperatur eines über mindestens einen ersten Wärmetauscher zu erwärmenden Mediums, vorzugsweise Wasser für eine Warmwasseraufbereitung, Wasser für einen Heizkreislauf, Zuluft für ein Gebäude und/oder Luft zum Erwärmen von Wasser in einem Konvektionswärmetauscher, steuert.

3. Vorrichtung nach Anspruch 1 oder 2, **dadurch gekennzeichnet, dass** die Vorrichtung einen zweiten Wärmetauscher hat, der mit Hilfe der aus dem Gebäude (50) abzuführenden Abluft die dem Gebäude (50) zuzuführende Zuluft erwärmt, wobei ein erster Kondensator (14) der ersten Wärmepumpe und/oder mindestens ein zweiter Kondensator (20) der zweiten Wärmepumpe die mit Hilfe des zweiten Wärmetauschers erwärmte Zuluft weiter erwärmt bzw. erwärmen, und wobei vorzugsweise ein Lüftungssystem zum Be- und Entlüften des Gebäudes (50) vorgesehen ist.

4. Vorrichtung nach Anspruch 2 oder 3, **dadurch gekennzeichnet, dass** der erste und/oder zweite Wärmetauscher ein Strömungswärmetauscher, insbesondere ein Kreuzstrom-Plattenwärmetauscher oder ein Gegenstromwärmetauscher, ist.

5. Vorrichtung nach einem der vorhergehenden Ansprüche, **dadurch gekennzeichnet, dass** die erste und/oder zweite Wärmepumpe eine Kompressionswärmepumpe ist, die vorzugsweise einen elektrischen Antrieb hat, wobei die Steuereinheit die Wärmemenge und/oder die Temperatur bedarfsorientiert regelt, und wobei die Steuereinheit vorzugsweise eine Pulsweitenmodullation oder eine Drehzahl des Kompressorantriebs der ersten und/oder zweiten Wärmepumpe einstellt.

6. Vorrichtung nach einem der Ansprüche 1 bis 4, **dadurch gekennzeichnet, dass** die erste Wärmepumpe und/oder mindestens die zweite Wärmepumpe eine Absorptionswärmepumpe oder eine Adsorptionswärmepumpe ist, die vorzugsweise durch eine Befeuerung angetrieben wird, wobei die Befeuerung vorzugsweise mit einem Gasbrenner erfolgt.

7. Vorrichtung nach einem der vorhergehenden Ansprüche, **dadurch gekennzeichnet, dass** die erste und/oder zweite Wärmepumpe das Erdreich, das Grundwasser, die Außenluft und/oder einen Abluftstrom des zu beheizenden Gebäudes als Wärmequelle nutzt, der sie zum Erzeugen der Heizleistung Wärme entzieht.

8. Vorrichtung nach Anspruch 7, **dadurch gekennzeichnet, dass** ein Wärmetauscher im Abluftstrom angeordnet ist, der dem Abluftwärmestrom die zum Erzeugen der Heizleistung der ersten und/oder zweiten Wärmepumpe Wärme entzieht.

9. Vorrichtung nach einem der vorhergehenden Ansprüche, **dadurch gekennzeichnet, dass** die Vorrichtung ein nach außen abgeschlossenes vorzugsweise luftdichtes Gehäuse (11) hat, in dem zumindest die erste Wärmepumpe und die zweite Wärmepumpe angeordnet sind,
wobei in diesem Gehäuse der erste und/oder zweite Wärmetauscher angeordnet ist,
wobei der Verdampfer (16) der ersten Wärmepumpe in einem Abluftwärmestrom des Gebäudes (50), vorzugsweise nach dem ersten Wärmetauscher (18), in dem Gehäuse (11) angeordnet ist,
wobei ein erster Kondensator (14) der ersten Wärmepumpe und mindestens ein zweiter Kondensator (20) der mindestens zweiten Wärmepumpe in einem Zuluftkanal zum Erwärmen der dem Gebäude zuzuführenden Zuluft angeordnet sind,
wobei mindestens die erste Wärmepumpe im Zuluftkanal vorzugsweise vor dem ersten und/oder zweiten Kondensator angeordnet ist,
wobei der Verdampfer der mindestens zweiten Wärmepumpe außerhalb des Gehäuses, vorzugsweise außerhalb des Gebäudes (50) angeordnet ist, und/oder
wobei das Gehäuse (11) wärmeisoliert, vorzugsweise wärme- und schallisoliert und/oder luftdicht, ist.

10. Vorrichtung nach einem der vorhergehenden Ansprüche, **dadurch gekennzeichnet, dass** die erste Wärmepumpe zum Erzeugen einer ersten Heizleistung und die zweite Wärmepumpe zum Erzeugen einer von der ersten Heizleistung verschiedenen zweiten Heizleistung ausgelegt sind; oder dass die erste Wärmepumpe und die zweite Wärmepumpe zum Erzeugen derselben Heizleistung ausgelegt sind,
wobei vorzugsweise mindestens eine der Wärmepumpen zum Erzeugen einer reduzierten Heizleistung betrieben werden kann.

11. Vorrichtung zum Erwärmen und/oder Austauschen von Luft in Räumen eines Gebäudes,
mit einem durch mindestens einen Frischluftanschluss mit der Umgebung des Gebäudes (50) in Verbindung stehendem Gehäuse (11), in das durch den Frischluftanschluss Frischluft aus der Umgebung ansaugbar ist, die durch mindestens einen am Gehäuse (11) vorgesehenen Zuluftanschluss, der mit den zu erwärmenden Räumen und/oder Wärmetauschern in Verbindung steht in die Räume des Gebäudes (50) bzw. zum Wärmetauscher gelangen kann,
mit einer ersten Wärmepumpe und mindestens einer zweiten Wärmepumpe,
wobei im Gehäuse (11) mindestens ein Kompressor (12) der ersten Wärmepumpe und ein Kompressor (18) der zweiten Wärmepumpe angeordnet sind.

12. Vorrichtung nach Anspruch 11, **dadurch gekennzeichnet, dass** zumindest ein Verdampfer (16) der ersten Wärmepumpe in einem Abluftstrom des Gebäudes (50) angeordnet ist.

13. Vorrichtung nach Anspruch 11 oder 12, **dadurch gekennzeichnet, dass** mindestens der Kondensator (14) der ersten Wärmepumpe im Gehäuse (11) angeordnet ist, vorzugsweise sind der Kondensator (14) der ersten Wärmepumpe und der Kondensator (20) der zweiten Wärmepumpe, im Gehäuse (11) angeordnet.

14. Vorrichtung nach einem der Ansprüche 11 bis 13, **dadurch gekennzeichnet, dass** der Verdampfer der zweiten Wärmepumpe außerhalb des Gehäuses (11), vorzugsweise außerhalb des Gebäudes (50) angeordnet ist.

15. Vorrichtung nach einem der Ansprüche 11 bis 14, **dadurch gekennzeichnet, dass** das Gehäuse (11) innerhalb des Gebäudes (50) angeordnet ist.

16. Vorrichtung nach einem der Ansprüche 11 bis 15, **dadurch gekennzeichnet, dass** mindestens ein Lüfter vorgesehen ist, durch den die Abluft aus dem Gebäude (50), die Zuluft in das Gebäude (50), die Außenluft in das Gehäuse (11) oder die Fortluft aus dem Gehäuse (11) gefördert wird.

17. Vorrichtung nach einem der Ansprüche 11 bis 16, **dadurch gekennzeichnet, dass** eine Raum- und/oder Außentemperatur geführte Regelung, vorzugsweise mit Hilfe eines Mikrocontrollerreglers, vorgesehen ist.

18. Vorrichtung nach einem der vorhergehenden Ansprüche 11 bis 17, **dadurch gekennzeichnet, dass** im Gehäuse (11) ein Strömungswärmetauscher (18) angeordnet ist, durch den die aus dem Gebäude (50) abgesaugte Abluft und die von außerhalb des Gebäudes angesaugte Frischluft räumlich getrennt aneinander vorbeigeführt werden, wobei die in der Abluft enthaltene Wärmeenergie zumindest teilweise an die angesaugte Frischluft abgegeben wird.

19. Vorrichtung nach Anspruch 18, **dadurch gekennzeichnet, dass** der Strömungswärmetauscher ein Kreuzstrom-Plattenwärmetauscher oder ein Gegenstromwärmetauscher ist.
